# EUROPEAN PATENT APPLICATION

(11) **EP 4 159 683 A1**
(43) Date of publication of application: **05.04.2023**
(21) Application number: 22199387.6
(22) Date of filing: 03.10.2022
(51) Int. Cl.: C01G 33/00

(54) **NANOSTRUCTURED HYBRID MATERIAL BASED ON NIOBIUM OLIGOMERS, OBTENTION METHOD AND USE THEREOF AS A FUNGICIDE AND BIOMARKER**

(30) Priority: 04.10.2021 BR 132021019928
(71) Applicant: Universidade Federal de Minas Gerais, 31270-901 Belo Horizonte (BR); Ondonto Tech Pesquisa e Inovação, Ltda, 30140-128 Belo Horizonte, MG (BR)
(72) Inventor: ALVES DE OLIVEIRA, LUIZ CARLOS, 31270-901 Belo Horizonte (BR); DE CASTRO OLIVEIRA, CINTHIA, 31270-901 Belo Horizonte (BR); BELCHIOR, JADSON CLAUDIO, 31270-901 Belo Horizonte (BR); PACHELI HEITMANN RODRIGUES, ANA, 31270-901 Belo Horizonte (BR); DE OLIVEIRA BRUZIQUESI, CARLOS GIOVANI, 31270-901 Belo Horizonte (BR)
(74) Representative: Clarke Modet & Co.

(57) **Abstract**

The present document relates to nanostructured materials based on polyoxoniobate, organic cations, quaternary ammonium salts and copper cations (Cu²⁺) with high foliar antifungal activity, which can also be used as biomarkers.

## Description

This document constitutes a Certificate of Addition to patent application BR1020200163620, entitled "NANOSTRUCTURED HYBRID MATERIAL BASED ON NIOBIUM OLIGOMERS, OBTENTION METHOD AND USE", filed on August 11, 2020, and relates to nanostructured materials based on in niobium oligomers, organic cations, quaternary ammonium salts and copper cations (Cu²⁺) with high foliar antifungal activity, which can also be used as biomarkers.

Fungal diseases are increasingly recognized as a global threat to food security and biodiversity. This is related to the fact that fungi are very resistant microorganisms that destroy crops and animal species. Although this problem is not new, fungal diseases still pose a widespread threat to various plant species, mainly wheat, corn, rice, potato and soybeans. It is estimated that at least 125 million tons of food are destroyed by fungal diseases each year. Environmental, genetic and biological factors directly or indirectly affect plant vitality (Matthew C. Fisher et al., "Emerging fungal threats to animal, plant and ecosystem health" Nature, 484(7393), 186-194, 2012).

Fungi act as pathogens based on their form of nutrition. The three main forms of action are (i) biotrophs, which survive by parasitizing the living tissue of the plant, (ii) necrotrophs, which feed on dead plant tissues, and (iii) hemibiotrophs, which initiate infection by feeding on plants. Fungal diseases are often controlled with the use of synthetic fungicides in agriculture However, prior identification of the pathogen is necessary, so that effective chemicals are used. Several fungicides are potential compounds against foliar pathogens, but these products are not ideal long-term solutions due to high cost, environmental and human health impacts. In addition, the evolution of phytopathogen resistance is considered a major problem in agriculture, and therefore, the development of new safe, effective and ecological pest control and management agents becomes urgent (Aly Derbalah et al., "Antifungal activity of fabricated mesoporous silica nanoparticles against early blight of tomato" Egyptian Journal of Basic and Applied Sciences, 5(2), 2018).

The development of nanotechnology can contribute to obtaining new agents for the detection and control of fungal diseases in plants. Nanoparticles, especially of metals and metal oxides, due to their reduced dimensions and large surface areas, have particular electronic, mechanical, magnetic and chemical properties. In this sense, the application of these nanometric compounds is already recognized in the areas of catalysis, photonics, biosensors and optoelectronics, and, recently, they have been highlighted in agricultural applications acting as antibacterial and antifungal agents (Aly Derbalah et al., "Antifungal activity of manufactured mesoporous silica nanoparticles against early blight of tomato" Egyptian Journal of Basic and Applied Sciences, 5(2), 2018) (L.A. Hermida-Montero et al., "Aqueous-phase synthesis of nanoparticles of copper/copper oxides and their antifungal effect against Fusarium oxyporum" Journal of Hazardous Materials, 38, 120850, 2019).

In general, metallic semiconductor nanoparticles, such as niobium nanoparticles, act as a fungicide through the production of reactive oxygen species (ROS). The ROS generated interfere with metabolic processes that damage cell components such as DNA, proteins and enzymes, which reduces spore viability. It is well known that the generated ROS causes cellular oxidative stress. In this case, an oxidant/antioxidant imbalance is created and consequently leads to membrane lipid degradation, leading to cell death (Dayem, A. A., et al., "The Role of Reactive Oxygen Species (ROS) in the Biological Activities of Metallic Nanoparticles" International Journal of Molecular Sciences, 18(1), 120, 2017).

Patent document BR102015025650, the priority date of which is 10/07/2015, entitled "Process for producing material comprising titanium dioxide with a surface modified with peroxo groups, said material applicable in heterogeneous catalysis processes under ultraviolet and visible radiation and use of said material as a bactericidal and antifungal agent, among other uses", describes obtaining materials based on titanium dioxide, whose surface is modified with peroxide groups that have photocatalytic activity, and that can be used as a bactericidal and antifungal agent.

The paper entitled "Aqueous-phase synthesis of nanoparticles of copper/copper oxides and their antifungal effect against Fusarium oxyporum" (L. A. Hermida-Montero et al., Journal of Hazardous Materials, 38, 120850, 2019) shows the synthesis of nanoparticles of copper and copper oxide with antifungal action against the fungus *Fusarium oxyporum.* The nanoparticles were obtained from the precipitation method with NaBH₄ solution.

In the state of the art, the use of anionic niobium species as foliar fungicides or biomarkers was not found.

The present technology relates to a compound based on anionic niobium nanoparticles that has the ability to contain the growth of fungi in plants. The compound fights the foliar fungi present in the plant, allowing better productivity. Its advantages compared to the state of the art are the use of commercial niobium compounds to obtain polyoxoniobates which are combined with non-toxic organic species and/or Cu²⁺ cations to improve their fungicidal action. In the state of the art, there is no report of the use of niobium compounds with fungicidal activity for application in agriculture. Therefore, another commercial application is proposed for this important chemical element, which is currently mostly used in the metallurgical industry.

### BRIEF DESCRIPTION OF DRAWINGS

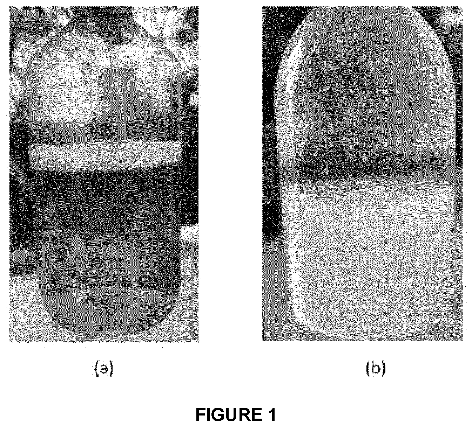

**Figure 1** shows two fungicidal formulations based on anionic niobium oligomers, in a) formulation of polyoxoniobates combined with cationic methylene blue, in b) formulation of polyoxoniobates combined with cetyltrimethylammonium bromide (CTAB).

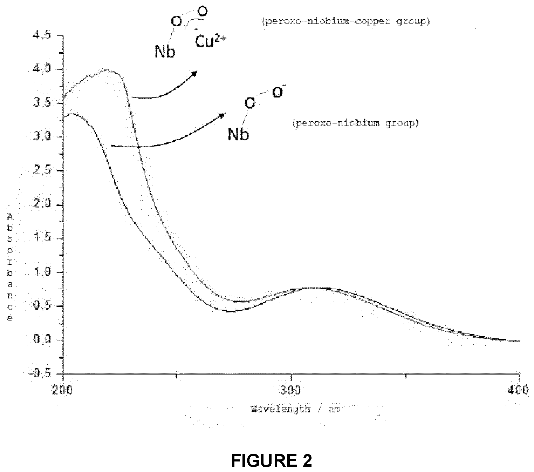

**Figure 2** shows a graph obtained from spectrometry in the UV-Vis region for the fungicidal formulation based on polyoxoniobates combined with Cu²⁺. Pure polyoxoniobate is indicated in the graph in black and copper polyoxoniobate in red. The indicated species are functional groups responsible for electronic transitions.

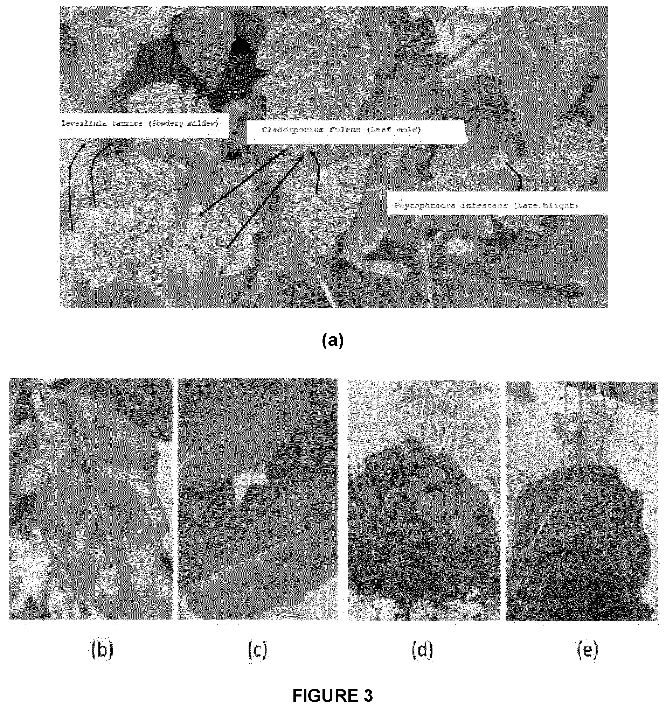

**Figure 3** presents photographs of a) tomato leaves with the fungi *Leveillula Taurica, Cladosporium fulvum, Phytophthora infestans;* b) tomato leaves without fungicide application; c) tomato leaves after application of fungicides based on polyoxoniobates; d) tomato roots without fungicide application; and e) tomato roots after application of fungicides based on polioxoniobates.

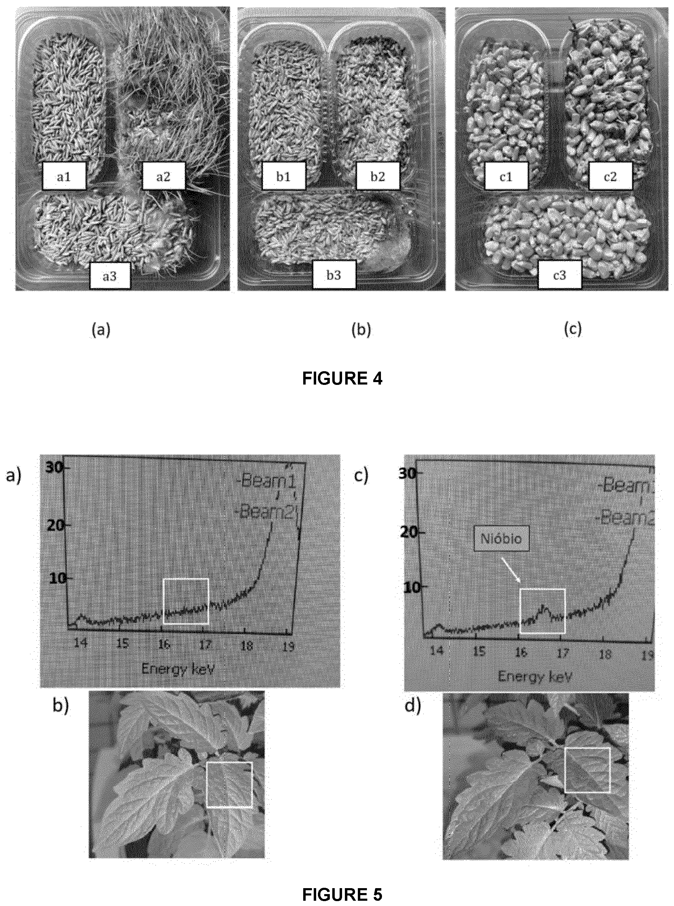

**Figure 4** shows photographs of seeds of a) rice b) oat and c) corn, in which a comparison is made between seeds to which a fungicide based on niobium with methylene blue was applied, represented by the samples indicated in a1, b1 and c1, and seeds to which the fungicide was not applied, indicated in a2, b2, c2, a3, b3 and c3.
**Figure 5** shows photographs of a) diffractogram of leaves without fungicides, obtained in a portable diffractometer; b) leaves without fungicides, c) diffractogram of leaves with fungicide based on niobium, obtained in a portable diffractometer, indicating the peak related to the presence of niobium; d) leaves with niobium-based fungicides.

### DETAILED DESCRIPTION OF THE TECHNOLOGY

The present technology relates to nanostructured materials based on niobium oligomers, organic cations, quaternary ammonium salts and copper cations (Cu²⁺) with high foliar antifungal activity, and can also be used as biomarkers, and their respective obtention methods.

The fungicides and markers based on niobium oligomers comprise anionic niobium oligomers and cations selected from the group comprising quaternary ammonium salts, cationic methylene blue, or Cu²⁺ salts in a ratio between 1:1, 2:1 or 1 :2 from niobates to cations.

Niobium oligomers can be obtained from the leaching of commercial niobium compounds selected from the group comprising niobium oxide, niobium pentoxide, niobic acid and niobium phosphate.

Quaternary ammonium salts can be selected from the group comprising hexadecyltrimethylammonium bromide (CTAB), alkyl dimethyl benzyl ammonium chloride, stearyl dimethyl ammonium chloride, cetyl trimethyl ammonium chloride, hexadecyltrimethyl ammonium bromide and cetyl trimethyl ammonium bromide.

Cu²⁺ salts can be selected from the group comprising copper hydroxide, copper oxychloride, copper chloride, cuprous oxide, copper nitrate, copper sulfate or tribasic copper sulfate.

The process of obtaining the fungicide comprises the following steps:
a. Dissolving niobium compounds containing between 1 and 5 g/L of niobium, in oxalic acid or hydrogen peroxide, to a final concentration between 10 and 50% m/m;
b. Mixing the anionic species obtained in "a" with water in a ratio of 1:1 to 1:10 of oligomers in relation to water;
c. Adding to the solution obtained in "b" cationic methylene blue or quaternary ammonium salts or Cu²⁺ salts in a ratio of 1:1, 1:2, or 2:1 of oligomers to cations;
d. Stirring the solution obtained in "c" between 10 and 100 rpm for a period of 30 to 120 minutes.

Niobium oligomers can be obtained from the leaching of commercial niobium compounds selected from the group comprising niobium oxide, niobium pentoxide, niobic acid and niobium phosphate.

Quaternary ammonium salts can be selected from the group comprising alkyl dimethyl benzyl ammonium chloride, stearyl dimethyl ammonium chloride, cetyl trimethyl ammonium chloride, hexadecyltrimethyl ammonium bromide (CTAB) and cetyl trimethyl ammonium bromide.

Cu²⁺ salts can be selected from the group comprising copper hydroxide, copper oxychloride, cuprous oxide, copper chloride, copper nitrate, copper sulfate and tribasic copper sulfate.

After obtaining the fungicidal solutions based on nanostructures of niobium with cations, they can be dripped on the leaves of the plants to prevent the proliferation of fungi. Furthermore, X-ray diffraction results indicated that the niobium fungicide can also be used as a marker and tracer, being able to identify crops in which the compound was used, monitor seeds and areas of illegal deforestation.

Niobium nanoparticles in combination with cations were significantly more fungicidal than niobium nanoparticles alone. In the present study, synergism between both components is evident. The combination of niobium nanoparticles and cations facilitates increasing the bioavailability of niobium nanoparticles by increasing the amount of this material in direct contact with the fungal membrane or by mechanisms that modulate the availability of the nanoparticle within the fungal cell. It is known that the direct contact of positively charged nanoparticles with the membrane of microorganisms occurs by electrostatic attraction with the highly negative charge of the cell surface. However, the niobium nanoparticles in the present study are negatively charged and, as a consequence, the repulsion of the negative charges present in the fungal cells is expected. Thus, the use of cations, combined with anionic niobium species, may be responsible for reducing the negative charge of nanoparticles, promoting the attachment of these particles to the fungal cell surface (Malandrakis A. A. et al., "Use of silver nanoparticles to counter fungicide- resistance in Monilinia fructicola:: Science of The Total Environment, 747, 141287, 2020).

The present technology can be better understood through the following nonlimiting examples.

### EXAMPLE 1 - OBTAINING NANOSTRUCTURED FUNGICIDES AND BIOMARKERS BASED ON NIOBIUM OLIGOMERS

The different formulations of fungicides were obtained from the mixture of 1.0 g of polyoxoniobates with 1000 mL of water. From this solution, three formulations of fungicides were prepared, the first, from the addition of 100 ml of cationic methylene blue at a concentration of 1000 mg/L, the second, from the addition of 100 ml of copper chloride at a concentration of 1000 mg /L and the third from the addition of 100 ml of cetyltrimethylammonium bromide at a concentration of 1000mg/L. In **Figure 1** it can be seen in **a)** the formulation with methylene blue, with a final concentration of 10 mg/L and in **b)** the formulation with cetyltrimethylammonium bromide at a final concentration of 200 mg/L. **EXAMPLE 2** - **CHARACTERIZATION OF THE FORMULATION OF NIOBIUM OLIGOMERS WITH Cu²⁺**

In order to characterize the material obtained, the fungicide solution based on niobium with copper was analyzed by spectrometry in the UV-Vis region. The analysis was performed in a UV-Vis spectrometer (Shimadzu -2600/2700) with scanning performed between 200-800 nm. The graph obtained can be seen in **Figure 2** where the red curve refers to the formulation of niobium oligomers with Cu²⁺ (Nb-Cu) and the black curve refers to the formulation of pure niobium oligomers. The shift to longer wavelengths, that is, to lower values of electronic transition energy of the Nb-Cu compound, can be seen when compared to the pure anionic oligomers. In addition, the increase in the area of the graph of the Nb-Cu compound in relation to the pure niobium compounds indicates a greater number of species being transported, generating more reactive oxygen species that act in the elimination of the fungus.

### EXAMPLE 3 - QUALITATIVE TESTS WITH NANOSTRUCTURED FUNGICIDES BASED ON NIOBIUM OLIGOMERS

Tomatoes were cultivated in a small area and evaluated for 40 days. After 40 days some fungal diseases were identified in the analyzed tomato plants according to the aspect that the leaves, branches and fruits presented. **Figure 3a** shows the diseased leaves of the tomato plant, in which the fungi *Leveillula taurica,* which causes the disease called powdery mildew, *Cladosporium fulvum,* which causes leaf mold, and *Phytophthora infestans,* which causes the late blight fungal disease, were identified. The identification of the fungal disease is fundamental for an adequate application of fungicides.

Niobium-based compounds with and without cetyltrimethylammonium bromide (CTAB) with fungicidal potential were applied since tomato flowering. It was noted that the leaves presented healthy aspects and it was no longer possible to observe signs of infection indicating that the molecules sprayed weekly protect the crops from the action of fungi. **Figure 3b** shows the leaves of the tomato where the fungicide was not sprayed and **Figure 3c** shows the leaves to which the niobium-based fungicides were applied.

This product not only acted in the elimination of fungi on tomato leaves, but also in the recovery of the roots and fruits of the plants. The fungal disease can also attack the roots and fruits of tomato plants, making them weak and vulnerable. In this sense, it can be seen in **Figure 3d** the roots without application of niobium-based fungicides and in **Figure 3e** the roots with the application of niobium fungicides. In this study, a fungicidal formulation containing 100 mg/L of polioxoniobate and 100 mg/L of CTAB was used. In addition, fungicides comprising niobium also acted in the protection of different seeds, preventing the onset of diseases, allowing the preservation of seeds for future crops. **Figure 4** shows the experiments with seeds of a) rice, b) oat and c) corn. In the group of samples, it can be noted that the samples on the top left, **a1, b1,** and c1, of each species were totally protected from the formation of fungi, in these samples the fungicide was used based on niobium with methylene blue (in this study the photoactive fungicide formulation containing 100 mg/L of polyoxo and 100 mg/L of methylene blue was used), while in the other samples, without the presence of the fungicide, an intense onset of fungi is noted.

### EXAMPLE 4 - IN VITRO TESTS WITH NIOBIUM-BASED NANOSTRUCTURED FUNGICIDES

In order to confirm and quantify the fungicidal effect based on niobium, fungicides with polyoxoniobates combined with Cu²⁺, with CTAB and with methylene blue were tested on soybean leaves. Experiments were carried out to induce the growth of the fungus *Phakopsora pachyrhizi* responsible for the onset of the Asian Rust disease and responsible for a large part of productivity losses in soybean crops.

The experiments were carried out in 3 Petri dishes with 4 leaflets (folioles)/plate. The spore suspension at an approximate concentration of 105 spores/mL was applied to the unifolioles. Then, the plates were incubated for a period of 14 days, in conditions of high humidity, photoperiod of 12 h and temperature of 24 °C.

The LC50 results (concentration needed to eliminate 50% of the fungus) show the efficiency of the niobium product combined with cations: 0.53 mg/L for polyoxoniobates with Cu²⁺, 1.13 mg/L for polyoxoniobates with methylene blue and 1.09 mg/L for polyoxoniobates with CTAB. It should be emphasized that, for the niobium compound without the cations, the LC50 result obtained was 4.11 mg/L. It can be noted that niobium nanoparticles in combination with cations were significantly more fungitoxic than niobium nanoparticles alone. In the present study, synergism between both components is evident. The combination of niobium nanoparticles and cations probably promotes increased bioavailability of niobium nanoparticles by increasing the amount of this material in direct contact with the fungal membrane or by mechanisms that modulate the availability of the nanoparticle inside the fungal cell.

In addition, data for a commercial compound *(Prothioconazole)* widely used by soybean producers showed an LC50 of 0.50 mg/L. The results obtained for the niobium materials in the present invention show its fungicidal potential and indicate its use with more efficiency since it does not exhibit toxicity and, unlike commercial compounds, it is soluble in water, making the application process less expensive. The copper-containing compound was the closest to the commercial one, and the reason for the best effect is indicated in **Figure 2****,** since after binding with the niobium compound, the new structure formed Nb-Cu allows an electron transition at a lower energy value.

### EXAMPLE 5 - USE OF NIOBIUM ANION OLIGOMERS AS BIOMARKERS IN PLANTS

Using a portable X-ray diffractometer, it was possible to identify the presence of niobium on the leaves. **Figure 5a** shows the diffractogram for the leaves without fungicide application, corresponding to the leaves shown in **5b.** **Figure 5c** shows the diffractogram for the leaves in which the fungicide based on anionic polyoxoniobates was applied, corresponding to the leaves shown in **5d.** Thus, it is found that niobium is identifiable from the peak in the diffractogram of **5c**, which indicates that the niobium fungicide can also be used as a marker and tracer, being able to identify crops where the compound was used, monitor seeds and areas of illegal deforestation.

## Claims

1. **A NANOSTRUCTURED HYBRID MATERIAL BASED ON NIOBIUM OLIGOMERS, characterized by** comprising negatively charged niobium oligomers and cations selected from the group comprising cationic methylene blue, Cu²⁺ salts, or quaternary ammonium salts in a ratio between 1:1, 1:2, or 2:1 of niobates to cations.

2. **A NANOSTRUCTURED HYBRID MATERIAL, according to claim 1, characterized in that** the negatively charged niobium oligomers are obtained from niobium oxide, niobium pentoxide, niobic acid and niobium phosphate, according to the process defined in claim 5.

3. **A NANOSTRUCTURED HYBRID MATERIAL, according to claim 1, characterized in that** the quaternary ammonium salts are selected from the group comprising hexadecyltrimethylammonium bromide (CTAB), alkyl dimethyl benzyl ammonium chloride, stearyl dimethyl ammonium chloride, cetyl trimethyl ammonium chloride and cetyl trimethyl ammonium.

4. **A NANOSTRUCTURED HYBRID MATERIAL, according to claim 1, characterized in that** the Cu²⁺ salts are selected from the group comprising copper hydroxide, copper oxychloride, copper chloride, copper nitrate, cuprous oxide, copper sulfate or tribasic copper sulfate.

5. **A PROCESS FOR OBTAINING THE NANOSTRUCTURED HYBRID MATERIAL defined in claim 1, characterized by** comprising the following steps:
**a)** dissolving niobium compounds containing between 1 and 5 g/L of niobium, in oxalic acid or hydrogen peroxide, to a final concentration between 10 and 50% m/m;
**b)** mixing the anionic species obtained in "a" with water in a ratio of 1:1 to 1:10 v/v of polyoxoniobate in relation to water;
**c)** adding to the solution obtained in "b" methylene blue or quaternary ammonium salts or Cu²⁺ salts in a ratio of 1:1, 1:2, or 2:1 v/v of niobium oligomers to cations;
**d)** stirring the solution obtained in "c" between 10 and 100 rpm for a period of 30 to 120 minutes.

6. **A PROCESS FOR OBTAINING THE NANOSTRUCTURED HYBRID MATERIAL, according to claim 4, characterized in that** in step "a" the niobium compounds are selected from the group comprising niobium oxides, niobium pentoxide, niobium chloride, niobic acid and niobium phosphate.

7. **A PROCESS FOR OBTAINING THE NANOSTRUCTURED HYBRID MATERIAL, according to claim 4, characterized in that** in step "c" the quaternary salts are selected from the group comprising hexadecyltrimethylammonium bromide (CTAB), alkyl dimethyl benzyl ammonium chloride, stearyl dimethyl ammonium chloride, cetyl trimethyl ammonium chloride and cetyl trimethyl ammonium bromide.

8. **A PROCESS FOR OBTAINING THE NANOSTRUCTURED HYBRID MATERIAL, according to claim 4, characterized in that** in step "c" the Cu²⁺ salts are selected from the group comprising copper hydroxide, copper oxychloride, cuprous oxide, copper chloride, copper nitrate, copper sulfate and tribasic copper sulfate.

9. **USE OF THE NANOSTRUCTURED HYBRID MATERIAL defined in claim 1, characterized by** being as fungicides to be applied in plants, or as biomarkers in the biomarking of plants.
